Europäisches Patentamt

European Patent Office

Office européen des brevets

(11) Veröffentlichungsnummer: **0 053 375**

**A1**

(12) # EUROPÄISCHE PATENTANMELDUNG

(21) Anmeldenummer: **81109966.2**

(51) Int. Cl.³: **F 24 J 3/04,** F 03 D 9/00

(22) Anmeldetag: **27.11.81**

(30) Priorität: **29.11.80 DE 3045099**

(71) Anmelder: **Greiner, Peter, Otto-Merz-Strasse 16, D-7922 Herbrechtingen (DE)**
Anmelder: **Pflüger, Hubert, Jugendheimstrasse 3, D-7988 Wangen 1 (DE)**

(43) Veröffentlichungstag der Anmeldung: **09.06.82 Patentblatt 82/23**

(72) Erfinder: **Greiner, Peter, Otto-Merz-Strasse 16, D-7922 Herbrechtingen (DE)**
Erfinder: **Pflüger, Hubert, Jugendheimstrasse 3, D-7988 Wangen 1 (DE)**

(74) Vertreter: **Wolf, Gunter, Dipl.-Ing. et al, Patentanwälte Dipl. Inge. Amthor und Wolf Postfach 180 144 Mittelweg 12, D-6000 Frankfurt/Main (DE)**

(84) Benannte Vertragsstaaten: **AT CH FR LI NL SE**

(54) **Gerät zur Wärmeumsetzung für Heizzwecke.**

(57) Das Gerät zur Wärmeumsetzung für Heizzwecke be-Belüftungsanschluss (2, 11) versehene, kreisförmige Gehälter mit Vor- und Rücklaufanschlüssen und einem flüssigkeitsdicht im Behälter stationär angeordneten, ebenfalls flüssigkeitsgefüllten Gehäuse, in dem ein auf die Flüssigkeit einwirkender, von aussen über eine Welle antreibbarer Rotor angeordnet ist.

Das Gerät ist zur Umsetzung von Wind- und Wasserenergie bestimmt, um damit das Wärmeträgermedium optimal direkt aufheizen zu können.

Dafür ist das mit einem befüll- und verschliessbaren Belüftungsanschluss (2, 11) versehen, kreisförmige Gehäuse (1) auf seinen Aussenflächen (3) mit einer die Wärmeübertragungsfläche vergrössernden Aussenverrippung (4) versehen. Mindestens eine der Gehäuseschalen (1') ist innenseitig mit einer Vielzahl von radial verlaufenden, gegen den Rotor (5) offenen Kanälen (6) ausgestattet. Der Rotor (5) ist auf seiner gegen die Kanäle (6) gerichteten Flächen mit entsprechenden Kanälen versehen. Der Durchgriff für die Welle (5') des Rotors (5) ist flüssigkeitsdicht gegen den Innenraum des Behälters (16) abgeschirmt ausgebildet.

## Gerät zur Wärmeumsetzung für Heizzwecke

Die Erfindung betrifft ein Gerät zur Wärmeumsetzung gemäß Oberbegriff des Hauptanspruches.

Geräte der genannten Art sind nach der DE-OS 29 01 997 bekannt. Dabei handelt es sich um einen Windkraftumsetzer, wobei in einem das Wärmeträgermedium enthaltenden Behälter mit Vor- und Rücklaufanschlüssen für einen oder mehrere Heizkreise ein weiterer, ebenfalls flüssigkeitsbefüllter Behälter angeordnet ist, in dem ein von einer Windturbine antreibbarer Rotor sitzt, dessen mühlradartig angeordnete Schaufeln innerhalb eines stationär im Behälter angeordneten Schaufelkranzes laufen.

Dieses Gerät knüpft gewissermaßen an eine Vorrichtung zum Erwärmen von Flüssgkeiten an, das gemäß DE-OS 26 47 741 mit einem Wirbelstromgenerator auf Magnetbasis arbeitet, wobei der Generator, ebenfalls von einer Windturbine angetrieben, unmittelbar in einer in einem mit Vor- und Rücklaufanschlüssen versehenen Behälter befindlichen Wärmeträgerflüssigkeit läuft bzw. angeordnet ist.

Der weitere vorbekannte und in etwa einschlägige St.d.T. ist bspw. durch die DE-OS 25 11 835, DE-OS 27 04 611,

- 2 -

DE-OS 26 2o 236 und die DE-OS 24 52 415 repräsentiert.

All diese Geräte haben sich zur Wärmeumsetzung, zumindest für Heizzwecke, als nicht brauchbar erwiesen und keine Markteinführung gefunden, weil sie auf Grund ihrer Ausführung und Wirkungsweise nur mit relativ niedrigem Wirkungsgrad arbeiten und nicht ausreichend hohe Temperaturen für den genannten Zweck erbringen.

Der Erfindung liegt demgemäß die Aufgabe zugrunde, das Gerät der eingangs genannten Art dahingehend zu verbessern, daß dessen Wirkungsgrad wesentlich erhöht und entsprechend hohe Temperaturen und damit ein für Heizzwecke tatsächlich brauchbares Temperaturgefälle zwischen den beteiligten Medien erzielt werden kann, die am kritischen Wellendurchgriff des Rotors dichtungsfrei voneinander völlig getrennt gehalten sein sollen.

Diese Aufgabe ist mit einem Gerät der eingangs genannten Art nach der Erfindung durch das im Kennzeichen des Hauptanspruches Erfaßte gelöst. Vorteilhafte Weiterbildungen ergeben sich nach den Unteransprüchen, wobei die Kombination aus den Merkmalen der Ansprüche 1, 7 und 8 bevorzugt wird.

Das Gehäuse mit seinem Rotor und den gegengeinander gerichteten Kanälen hat zwar eine gewisse Ähnlichkeit mit den bekannten hydraulischen Leistungsbremsen und Strömungskupplungen, bei Strömungskupplungen aber, die jedoch keinen Stator aufweisen, ist alles darauf abgestellt, eine Wärmeumsetzung möglichst zu reduzieren (Mitlaufbarkeit des Gegenpartes und Ausbildung der Kanäle derart, daß eine ringförmige Drallströmung entsteht), während bei den Leistungsbremsen (Wasserwirbelbremsen) die ganze Anordnung so getroffen ist, daß das Bremsmedium (Wasser) im Durchlauf in die Bremse eingeleitet und unter Ausbildung eines Wasserringes aus diesem ausgeschält und über ein Ausschälrohr abgeführt wird, d.h. aber, das Bremsgehäuse ist offen und Temperaturerhöhungen in für den vorliegenden Zweck geeignete Bereiche sind nicht möglich. Im übrigen würde die direkte Einleitung des erwärmten Bremsmediums in ein Heizungssystem mit dem Nachteil verbunden sein, daß unvermeidbar Schmiermittelpartikel und Luft in das Heizungssystem gelangen können.

Die Maßgabe im Kennzeichen des Hauptanspruches, daß der Durchgriff ... flüssigkeitsdicht ... abgeschirmt ausgebildet sein soll, ist demgemäß so zu verstehen, daß nicht etwa eine flüssigkeitsdichte Abdichtung vorgesehen ist, sondern daß die unvermeidbaren Dichtungsspalte der Wellendichtung nicht in den Behälterinnenraum münden, sondern ins Freie, was bedeutet, daß etwa aus dem Gehäuse austretende Flüssigkeit

- 4 -

(bspw. Hydrauliköl) nicht in das Heizmedium gelangen kann.

Versuche mit dem erfindungsgemäßen Gerät, das mit einer mittleren Leistung von 22 KW und einer Drehzahl von 550 min$^{-1}$ angetrieben wurde, ergab sich ein Wirkungsgrad von $\eta = 97\%$. Dieser hohe Wirkungsgrad der Wärmeumsetzung bei völliger Getrennthaltung der beteiligten Medien ist erreichbar durch die Kombination der Merkmale gemäß Kennzeichen des Hauptanspruches.

Das erfindungsgemäße Gerät wird nachfolgend an Hand der zeichnerischen Darstellung von Ausführungsbeispielen näher erläutert.

Es zeigen schematisch

Fig. 1 ein Blockbild des gesamten Gerätes;

Fig. 2 einen Schnitt durch das Gehäuse mit dem Rotor;

Fig. 3 eine Ansicht des Gehäuses in Pfeilrichtung gemäß

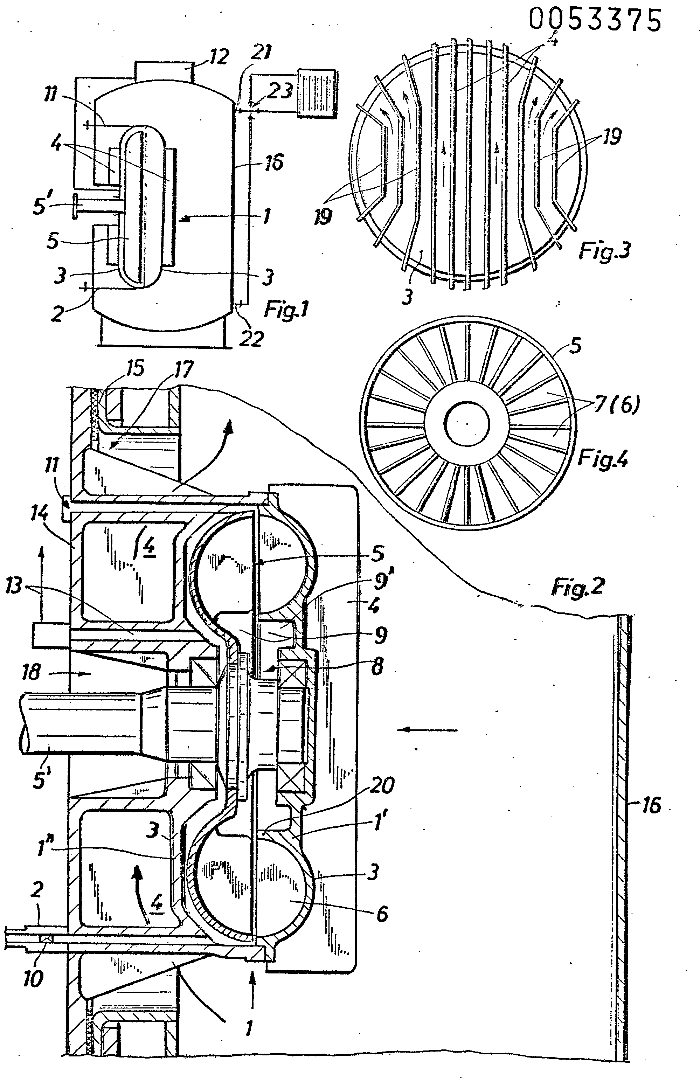

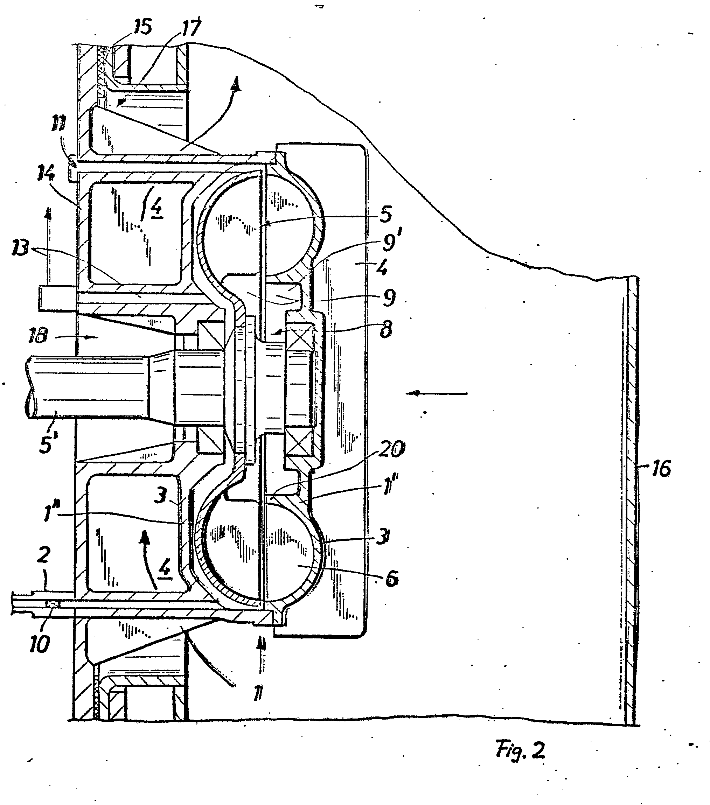

   Fig. 2 und

Fig. 4 eine Ansicht des Rotors ebenfalls in Pfeilrichtung.

Gemäß Fig. 1 sitzt das Gehäuse 1, das im Schnitt quer zur Welle 5′ kreisförmig ist, im Behälter 16, der über seine Vor- und Rücklaufanschlüsse 21,22 und vorteilhaft ein Mischventil 23 mit einem Heizkreis verbunden ist.

Die Außenflächen 3 des Gehäuses sind mit einer Außenverrippung 4 im Sinne der Fig. 3 versehen, d.h. die Rippen verlaufen im wesentlichen senkrecht, so daß die als Wärmeträgermedium im Behälter 16 befindliche Flüssigkeit zwischen den Rippen nach oben strömen kann. Durch diese Außenverrippung 4 (Rippenverläufe könnten auch insgesamt schräg angeordnet sein;im gezeigten Ausführungsbeispiel sind nur die Rippen 19 an ihren Enden etwas abgewinkelt) wird die Wärmeübertragungsfläche des Gehäuses 1 natürlich beträchtlich vergrößert, wodurch die im Gehäuse 1 erzeugte Wärmemenge überhaupt erst schnell umgesetzt bzw. an das Wärmeträgermedium im Behälter 16 übertragen werden kann.

Wie aus Fig. 2 erkennbar, besteht das Gehäuse 1 aus zwei Schalen 1′, 1″. In Seitenansicht gemäß Pfleilrichtung von rechts bietet sich die Schale 1′ gemäß Fig. 3 dar. Ferner weist die Schale 1′, wie erkennbar, noch das Lager für die Welle 5′des Rotors 5 auf, den Teil 9′ eines Ringkanales 9 im Zentrumsbereich 8 und radiale Kanäle 6 im Sinne der Fig. 4, die allerdings den Rotor 5 in Seitenansicht zeigt.

Die andere Schale 1″ ist, wie erkennbar, wesentlich komplexer

- 6 -

gestaltet, da sie mittels eines Anschlußflansches 14 das ganze
Gehäuse mit Rotor 5 im Behälter 16 hält, der eine entsprechend
große Öffnung 17 und einen entsprechend großen Flansch 15 aufweist. Dadurch kann das ganze Gehäuse 1 mit Rotor 5 und allen
anderen noch zu beschreibenden Anschlüssen denkbar einfach in den
Behälter 16 ein- und ausgebaut werden. Besonders wesentlich
und vorteilhaft ist dabei aber, daß durch diese Konstruktion
der Wellendurchgriff in einem Wellendurchgriffstunnel 18 erfolgt,
d.h. Leckagen aus dem Gehäuseinnenraum im Bereich des Wellendurchgriffes können nur ins Freie, aber nicht in das im Behälter 16 befindliche Wärmeträgermedium gelangen.

Bis auf den Bereich des Durchgriffswellentunnels 18 ist
die Fläche 3 der Schale 1" natürlich auch mit einer Außenverrippung 4' versehen, so daß das Gehäuse auch auf dieser
Seite vom Wärmeträger im Sinne der Pfeile in Fig. 2 besprüht
und die Wärme weggeführt werden kann.

Da die Dichtung zwischen den Schalen 1', 1" nur statisch belastbar ist, sind an dieser Stelle keine Leckagen zu befürchten.
Eine solche statisch belastete Dichtung liegt natürlich auch
zwischen den Flanschen 14, 15, wie dargestellt, vor.

Wesentlich für die angestrebte optimale Funktion ist nun auch,
daß der Innenraum des Gehäuses 1 vollständig mit Flüssigkeit gefüllt werden kann und dieser Füllungsgrad auch erhalten
bleibt.

Dies setzt voraus, daß ein Befüllanschluß 2 und auch ein Belüftungsanschluß 11 vorhanden sein müssen, wobei im Befüllanschluß 2 vorteilhaft eine thermische Schmelzsicherung lo vorgesehen ist, die auf thermische Überlastungen anspricht und
wobei der Befüllanschluß 11 nach vollzogener Füllung des Gehäuses 1 mit bspw. Hydrauliköl dicht abschließbar sein muß.

Da sich bei den erreichbaren hohen Temperaturen das Öl auch
ausdehnt, ist das ganze Gerät bzw. das Gehäuse 1 mit einem
Ausdehnungsgefäß 12 versehen. Vorteilhaft wird aber die Leitung
13 zum Ausdehnungsgefäß 12, wie in Fig. 2 erkennbar, angeordnet,
d.h. im Zentrumsbereich 8 aus- bzw. einmündend.

Die Anordnung dieser zusätzlichen Leitung 13 und noch dazu
im Zentrumsbereich hat ihren Grund darin, daß eine Anordnung
der Leitung 13 ganz oben nicht die gewünschte Ausdehnungsfunktion bringt, bzw. diese behindert wird, vermutlich deshalb,
weil die vom Rotor mitgenommene Flüssigkeit einen starren Ring
und damit eine regelrechte Barriere bildet.

Als vorteilhaft für die Laufeigenschaften des Rotors 5 hat sich
auch die Anordnung eines verrippungsfreien Ringkanales 9 im
Zentrumsbereich 8 erwiesen.

- 8 -

Der Rotor 5 mit seinen gegen die offenen Kanäle 6 der Gehäuseschale 1 gerichteten Kanälen 7 läuft also vollständig
untergetaucht im stationären Flüssigkeitsbad, wobei Strömungen
praktisch nur zwischen dem Rotor 5 und der Schale 1'erfolgen,
dabei die Strömungsflächen aber immer wieder zerrissen werden,
was zu hoher Reibung und Wärmeumsetzung führt. Das Flüssigkeitsbad muß dabei das Gehäuse ebenfalls vollständig ausfüllen.
Da das Gehäuse 1 ebenfalls nahezu vollständig vom Wärmeträger
umgeben ist, ist die erzeugte Wärme nahezu verlustfrei an diesen
übertragbar.

Bei Füllung des Gehäuses 1 mit temperaturbeständigem Öl,
wie vorzugsweise Öle auf Walölbasis, Hydrauliköl od.dgl. sind
ohne weiteres Temperaturen in der Größenordnung von 15o bis
18o°C erreichbar.

Die Testversuche mit dem vorerwähnten hohen Wirkungsgrad wurden
natürlich mit einem E-Motor gefahren.

In der praktischen Anwendung des Gerätes kommt ein solcher
Antrieb natürlich nicht in Frage, sondern dieser würde bspw.
bevorzugt durch eine Wasserturbine erfolgen. Antrieb durch
eine Windturbine in windreichen Gegenden, die also eine hohe
und weitgehend konstante Windenergie erwarten lassen, ist
natürlich auch ohne weiteres möglich.

- 9 -

Von besonderem Interesse ist jedoch der Einsatz des beschriebenen Wärmeumsetzers hinsichtlich seines Antriebes
im Bereich von Aufzügen bzw. Liften aller Art, da dort
in der Regel immer bei Abwärtsfahrt beträchtliche Bremsenergien aufgebracht werden müssen, die bis heute unausgenutzt bleiben. Eine solche Anwendung gilt insbesondere für
größere Hotels und Hochhäuser, in denen in der Regel
mehrere Aufzüge ständig in Betrieb sind.

0053375

_ 10 _

**Patentansprüche:**

1. Gerät zur Wärmeumsetzung für Heizzwecke, bestehend aus einem wärmeträgerbefüllbaren Behälter mit Vor- und Rücklaufanschlüssen und einem flüssigkeitsdicht im Behälter stationär angeordneten, ebenfalls flüssigkeitsgefüllten Gehäuse, in dem ein auf die Flüssigkeit einwirkender, von außen über eine Welle antreibbarer Rotor angeordnet ist, d a d u r c h   g e k e n n z e i c h n e t , daß das mit einem Befüll- und verschließbaren Belüftungsanschluß (2,11) versehene, kreisförmige Gehäuse (1) auf seinen Außenflächen (3) mit einer die Wärmeübertragungsfläche vergrößernden Außenverrippung (4) versehen ist und daß mindestens eine der Gehäuseschalen (1') innenseitig mit einer Vielzahl von radial verlaufenden, gegen den Rotor (5) offenen Kanälen (6) und der Rotor (5) auf seiner gegen die Kanäle (6) gerichteten Fläche mit entsprechenden Kanälen (7) versehen ist, wobei der Durchgriff für die Welle (5') des Rotors (5) flüssigkeitsdicht gegen den Innenraum des Behälters (16) abgeschirmt ausgebildet ist.

2. Gerät nach Anspruch 1, d a d u r c h   g e k e n n -
z e i c h n e t , daß im Zentrumsbereich (8) des Gehäuses (1) am Rotor (5) und an der diesem gegenüber angeordneten, mit Kanälen (6) versehenen Gehäuseschale (1') ein

- 12 -

verrippungsfreier Ringkanal (9) angeordnet ist.

3. Gerät nach Anspruch 1 und/oder 2, d a d u r c h  g e -
k e n n z e ic h n e t , daß der Befüllanschluß (2) am
untersten Bereich des Gehäuses (1) angeordnet ist.

4. Gerät nach Anspruch 3, d a d u r c h  g e k e n n -
z e i c h n e t , daß im Befüllanschluß (2) eine thermische
Sicherung (1o) angeordnet ist

5. Gerät nach einem der Ansprüche 1 bis 4, d a d u r c h
g e k e n n z e i c h n e t , daß am obersten Bereich des
Gehäuses (1) ein verschließbarer  Belüftungsanschluß (11)
angeordnet ist.

6. Gerät nach einem der Ansprüche 1 bis 5, d a d u r c h
g e k e n n z e i c h n e t , daß im Zentrumsbereich (8)
des Gehäuses (1) eine zu einem Ausdehnungsgefäß (12) führende
Anschlußleitung (13) angeordnet ist.

7. Gerät nach einem der Ansprüche 1 bis 6, d a d u r c h
g e k e n n z e i c h n e t , daß die wellenseitige Schale
(1") des Gehäuses (1) mit einem Flanschanschluß (14) versehen ist, wobei der äußere Flanschumfang im Durchmesser
größer bemessen ist als der Durchmesser des Gehäuseaußenumfanges und daß der mit einem Anschlußflansch (15) versehene Behälter (16) innerhalb seines Anschlußflansches (15) mit einer Öffnung (17) versehen und deren Durchmesser größer bemessen ist als der Durchmesser des Gehäuseaußenumfanges.

8. Gerät nach Anspruch 7 , d a d u r c h  g e k e n n - z e i c h n e t , daß im Flanschanschluß (14) der Befüllanschluß (2), der Belüftungsanschluß (11), der eine Teil der Außenverrippung (4') des Gehäuses (1) und ein Wellendurchgriffstunnel (18) zu einem Teil integriert angeordnet sind.

9. Gerät nach einem der Ansprüche 1 bis 8, d a d u r c h  g e k e n n z e i c h n e t , daß die Außenverrippung (4) des Gehäuses (1) vertikal oder zur Vertikalen geneigt verlaufend angeordnet ist.

1o. Gerät nach Anspruch 9, d a d u r c h  g e k e n n - z e i c h n e t , daß die Rippen (19) in den beiden Seitenbereichen der Außenverrippung (4) des Gehäuses (1) oben und unten nach außen abgeknickt verlaufend ausgebildet sind.

11. Gerät nach Anspruch 2, d a d u r c h  g e k e n n - z e i c h n e t , daß der im Gehäuse (1) verlaufende Teil (9') des verrippungsfreien Ringkanales (9) gegen die gegen den Rotor (5) offenen Kanäle (6) mit einer ringförmigen Trennwand (2o) abgeschirmt ist.

12. Gerät nach Anspruch 1 und/oder 2, d a d u r c h   g e -
k e n n z e i c h n e t , daß die gegeneinander offenen
Kanäle (6,7) im Rotor (5) und i n der Gehäuseschale (1')
im Querschnitt kreisförmig bzw. angenähert kreisförmig
ausgebildet sind.

13. Gerät nach jedem der Ansprüche 1 bis 12, d a d u r c h
g e k e n n z e i c h n e t , daß die Flüssigkeit, mit
der das Gehäuse (1) befüllt ist, ein mindestens über 18o° C
siedendes Öl, wie Hydrauliköl, Öl auf Walölbasis oder
dergl., ist.

1/2

0053375

Fig.1
Fig.2
Fig.3
Fig.4

0053375

Fig. 2

| | | | |
|---|---|---|---|
| Europäisches Patentamt | **EUROPÄISCHER RECHERCHENBERICHT** | | EP 81109966.2 |

| **EINSCHLÄGIGE DOKUMENTE** | | | **KLASSIFIKATION DER ANMELDUNG (Int. Cl.)** |
|---|---|---|---|
| Kategorie | Kennzeichnung des Dokuments mit Angabe, soweit erforderlich, der maßgeblichen Teile | betrifft Anspruch | |
| P | DE - A1 - 2 952 749 (ENGELHARDT) (02-07-1981) <br> * Seite 3, 3. Absatz * <br> -- | 1 | F 24 J 3/04 <br> F 03 D 9/00 |
| | DE - A - 1 813 469 (KNORR-BREMSE) <br> * Fig. 1 * <br> -- | 1,12 | |
| | DE - A - 1 675 248 (TEVES) <br> * Fig. 1 * <br> -- | 1 | |
| | DE - A - 1 945 128 (INSTITUT GORNOGO DELAIMENI) <br> * Fig. 1 * <br> -- | 1 | **RECHERCHIERTE SACHGEBIETE (Int. Cl.)** |
| | DE - A - 1 525 379 (FERODE) <br> * Fig. 1 * <br> -- | 2,11 | F 24 J <br> F 03 D <br> F 16 D |
| | AT - B - 213 169 (VOITH) <br> * Gesamt * <br> -- | 3,5 | B 61 H <br> F 03 B <br> F 03 C |
| | DE - B2 - 2 413 732 (LABAVIA) <br> * Fig. * <br> -- | 6,7 | |
| | "HYDRAULISCHE GETRIEBE FÜR SCHIENENFAHR-ZEUGE" Semitschastnow-Büttner, <br> VEB VERLAG TECHNIK, Berlin 1959 <br> * Seite 27 * <br> -- | 13 | **KATEGORIE DER GENANNTEN DOKUMENTE** <br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze |
| D | DE - A1 - 2 647 741 (INCO EUROPE) <br> * Gesamt * <br> ---- | 1 | E: kollidierende Anmeldung <br> D: in der Anmeldung angeführtes Dokument <br> L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| WIEN | 28-01-1982 | SCHMIDT |

EPA form 1503.1  06.78

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| D | <u>DE - A1 - 2 901 997</u> (HANSEN) <br><br> * Anspruch 3 * <br><br> ----- | | |
| | | | **RECHERCHIERTE SACHGEBIETE (Int. Cl.³)** |